Europäisches Patentamt

European Patent Office

Office européen des brevets

(11) Publication number: **0 249 674**
**A1**

## (12) EUROPEAN PATENT APPLICATION

(21) Application number: **86850228.7**

(22) Date of filing: **18.06.86**

(51) Int. Cl.⁴: **F16H 25/22**

(43) Date of publication of application:
**23.12.87 Bulletin 87/52**

(84) Designated Contracting States:
**AT BE DE FR GB IT NL**

(71) Applicant: **Granbom, Bo**
**Lostigen 13**
**S-731 42 Köping(SE)**

(72) Inventor: **Granbom, Bo**
**Lostigen 13**
**S-731 42 Köping(SE)**

(74) Representative: **Onn, Thorsten et al**
**AB STOCKHOLMS PATENTBYRA Box 3129**
**S-103 62 Stockholm(SE)**

(54) Device for converting a rotary motion into a linear one.

(57) A device for converting a rotary motion into a linear one comprising a first elongate body (1) provided with screw threads (2) extending along the body and a rotatable second body (3) arranged coaxially with the first body (1). A number of first rolls (15) each having a cylindrical mantle surface provided with parallel cams (16) are arranged between the first and the second body with the cams (16) in engagement with the threads (2) of the first body (1). According to the invention a third annular body (10, 10') is arranged concentrically be-tween the first (1) and second (3) body and has parallel grooves (13) on an interior cylindrical mantle surface, the first rolls (15) rolling against and engaging with the cams (16) with the interior cylindrical mantle surface of the third body (10, 10'). Rotatable bearing means (17) are further arranged between the second (3) and third (10, 10') body permitting this to be freely rotatable and axially undisplaceable relative to the second body (3).

FIG.1

## Device for converting a rotary motion into a linear one

This invention relates to a device for converting a rotary motion into a linear one, as indicated in the preamble of claim 1.

A plurality of different devices are known converting a rotary motion into a linear one and using in principle a threaded screw coacting with a carrier provided with rolls, said rolls having threads or grooves coacting with the threads of the screw. Besides the problem in many of these known devices, i.e. to prevent an obliquity and seizure of the operation of the device there is also a problem, even if the device does not seize, of obtaining an even run at an even rate. This is especially the case when the rolls are provided with peripheral, parallel rills and bars extending transversely to the axial direction and in engagement with the threads of the screw. At skidding in the system a relative change of rate appears between housing and screw, and if for instance the rolls are braked for some reason a change of rate is obtained at this moment.

These disadvantages are eliminated by the invention being given the characteristic features defined in the claims, and the linear motion of the device will be constant even if the rolls should skid or be quite still on some occasion.

By means of the invention it is possible to balance the mass forces with each other to a certain extent at retardation and acceleration which is not possible with the devices so far known.

Moreover, through the invention it is possible to obtain a higher linear rate relative to the speed than what is the case with current known devices of this type. This means that the screw or spindle can be made longer without any critical speed arising.

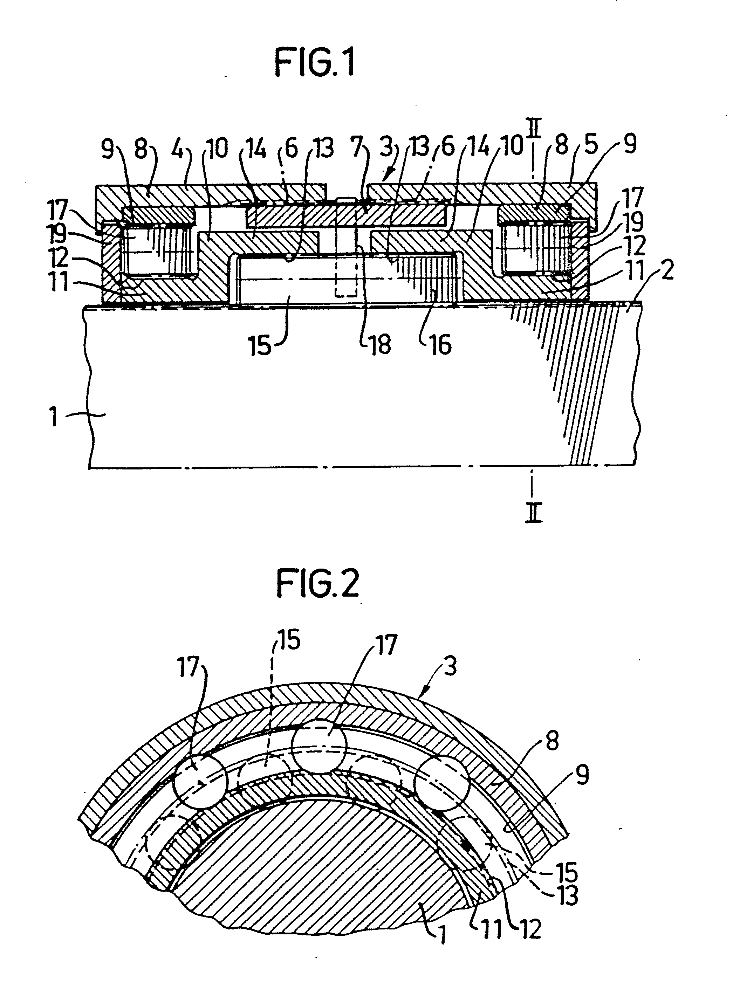

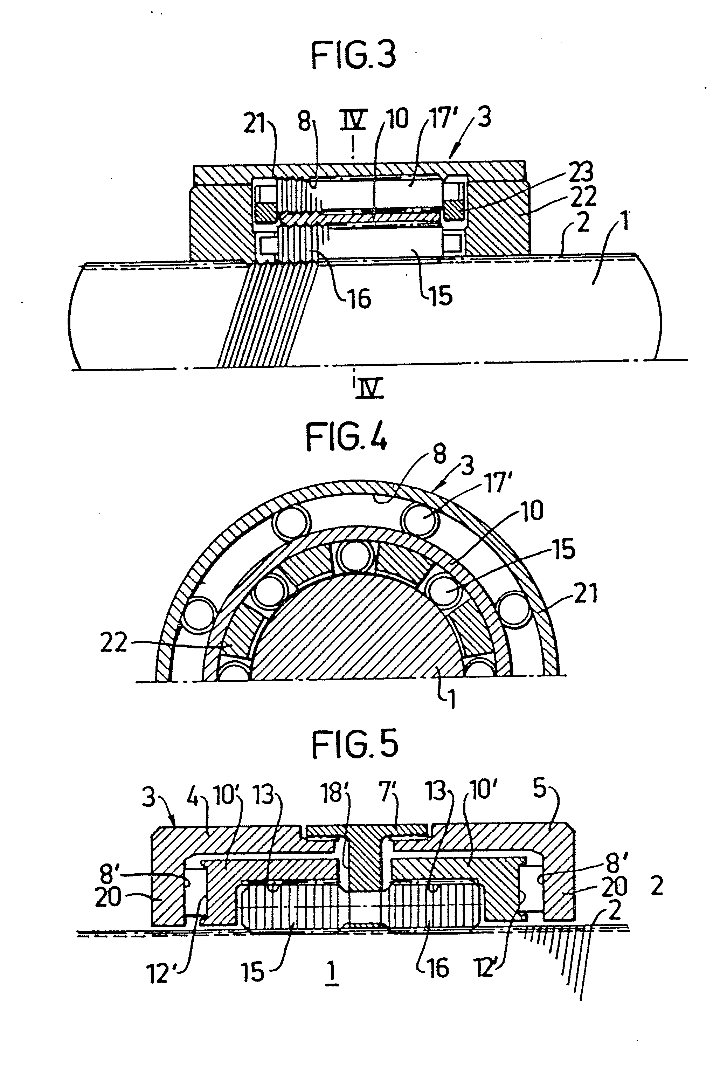

The invention will be described in greater detail in the form of examples with reference to the drawing, wherein Fig. 1 shows an embodiment of the device as seen in half a partial section laterally, Fig. 2 is a partial section of this device taken along the line II-II in Fig. 1, and Figs. 3 and 4 are partial sections of another embodiment of the invention. Fig. 5 is a lateral partial section of another embodiment of the invention.

The figures show only the very inventive idea in detail while the rest of the machine element, in which the invention is included, is omitted. In general it can be stated that the machine element consists of a threaded screw mounted in a suitable manner and operated e.g. by an electric motor. A housing for supporting the rolls coacting with the threaded screw can be connected with an axially displaceable sleeve surrounding the screw. Of course the housing or the sleeve can instead be driven by an electric motor via e.g. a gear reduction set, the housing or sleeve moving axially along the screw at inoperative screw.

In the figures 1 designates a screw or spindle provided with threads 2. Coaxially with the spindle 1 there is arranged a housing 3 which consists of two annular portions 4 and 5 according to Figs. 1 and 5. As is apparent from Fig. 1 the portions 4 and 5 have interior threads 6 coacting with a sleeve 7 threaded on its outside. Moreover, the housing 3 has two annular tracks 8 each being provided with parallelly extending grooves 9. Two annular bodies 10 are arranged coaxially with each other between the housing 3 and the spindle 1. The respective body 10 has further a cylindrical portion 14 and a weaker cylindrical portion 11. The weaker cylindrical portion 11 has a track 12 formed with grooves corresponding to the grooves 9 of the track 8. Furthermore, the respective cylindrical body 10 is provided with interior grooves 13 arranged in the wider cylindrical portion 14 of the body. The grooves 9 as well as the grooves 13 are parallel with each other and extend transversely to the symmetry axis of the relative portion.

As apparent from the figures a number of first rolls 15 provided with cams 16, which correspond to the grooves 13 in the cylindrical portion 14, are arranged in engagement with the threads of the spindle 1 and the grooves 13 of the respective cylindrical body 10. It is then to be understood that the cam profile of the respective groove 15 correspond to the thread profile 2 of the spindle 1.

Further rolls 17 are arranged between the track 12 of the respective annular or cylindrical body 10 and the track 8 of the housing 3 which rolls are provided with cams or ridges having such a pitch and form that they engage and coact with the grooves of the respective track.

In Fig. 1 as a roll carrier 18 is for instance attached to the sleeve 7, as indicated in the figure. Thus, the roll carrier 18 engages the central portion of the respective roll 15. 19 designates a protection arranged at each end of the housing 3. The rolls 17 are maintained in position relative to each other by means of roll carriers (not shown) of some current type.

The rolls 15 and 17 are axially fixed in the device in such a way that its cams engage the grooves of the tracks and the threads of the screw 1, respectively. By turning one of the annular portions 4 and 5 of the housing relative to the other and consequently moving said portion axially by means of the threads of the sleeve 7 it is possible to eliminate completely appearing play between rolls and tracks and screw, respectively.

Besides the advantage of the invention indicated above in comparison with known technology a low housing 3 can be built in by the embodiment shown, simultaneously as axial forces can be absorbed which are essentially greater than what should be possible with the same built-in dimension but using ball bearings.

Figs. 3 and 4 show a somewhat different embodiment of the invention. As previously described the device comprises a spindle or screw 1 with threads 2 and an annular body 10 provided with grooves, rolls 15 being arranged between the spindle 1 and the body 10 and engaging the threads and grooves by means of cams 16. In this embodiment the annular or cylindrical body 10 is provided with grooves also on the outer mantle side. Between the body 10 and a cylindrical annular portion 21 of the housing 3, which has a track 8 provided with grooves on its inside, further rolls 17' are arranged with their cams or ridges in engagement with the corresponding grooves of the body 10 and the portion 21. As is apparent from the figures the rolls 17' are of the same length as the rolls 15 which means that all the rolls in the device can be made identical.

22 designates a roll carrier of the rolls 15 which forms at the same time end parts of the housing 3. The roll carrier is then fixed in suitable manner to the cylindrical annular portion 21. A roll carrier 23 is arranged to guide the rolls 17'.

A somewhat different embodiment of the invention is shown in Fig. 1. The annular portions 3 and 4 are kept together via the threads by an outer sleeve 7' which is integral with a roll carrier 18'. The interior cylindrical bodies 10' are here lacking the weaker cylindrical portions and have instead plane radially extending tracks 12', as is apparent from the figure. Between the inside of downward flanges 20 of the relative annular portion 4 and 5 a number of conical rolls 17' are arranged, guided by shoulders of the tracks 12' and retained in position relative to each other by suitable roll carriers (not shown). This embodiment also does not require much space when being built-in and its manufacture is less expensive as compared with the embodiments described in conection with Figs. 1 and 2. It is to be understood that the rolls 17' can be replaced by balls running in tracks shaped for this, in principle forming ball bearings.

As will be appreciated the interior rings or cylindrical bodies 10 and 10' will rotate with the screw 1, at stationary housing, in operation of the device, permitting the operational advantages treated in the introductory part.

By providing the rolls 17, 17' with teeth engaging the corresponding teeth in the track 8 or 12 it is possible to omit the roll carriers of these rolls 17. Of course the corresponding thing also applies to the rolls 15 which can engage teeth either in the cylindrical bodies 10 or teeth arranged along the spindle 1.

## Claims

1. A device for converting a rotary motion into a linear one comprising a first elongate body (1) provided with screw threads (2) extending along the body and a rotatable second body (3) arranged coaxially with the first body (1), a number of first rolls (15) each having a cylindrical mantle surface provided with parallel cams (16) being arranged between the first and the second body with the cams (16) in engagement with the threads (2) of the first body (1), **characterized** in that a third annular body (10, 10') is arranged concentrically between the first (1) and second (3) body and has parallel grooves (13) on an interior cylindrical mantle surface, the first rolls (15) rolling against and engaging by means of the cams (16) the cylindrical mantle surface of the third body (10, 10'), and that rotatable bearing means (17) are arranged between the second (3) and third (10, 10') body permitting this to be freely rotatable and axially undisplaceable relative to the second body (3).

2. The device of claim 1, **characterized** in that the third body (10) is provided with two cylindrical tracks (12) arranged on each side of the interior cylindrical mantle surface, coaxial with this and provided with mutually parallel grooves and that the bearing means consist of cylindrical second rolls (17), the mantle surfaces of which are provided with mutually parallel, peripherically extending bars which coact with the grooves of the tracks (12) and with grooves (9) arranged in the second body (3).

3. The device of claim 2, **characterized** in that the cylindrical tracks (12) provided with grooves are located on a radius less than the radius of the interior cylindrical mantle surface of the third body (10).

4. The device of claim 1, **characterized** in that the third body (10) has a length substantially agreeing with the first rolls (15) and that the bearing means consist of cylindrical rolls (17') substantially as long as the first rolls (15) and provided with mutually parallel peripherically extending bars which coact with grooves on the outside of the third body (10) and with grooves arranged in the second body (3).

5. The device of claim 4, **characterized** in that the first rolls (10) and the bearing means (17') are identically similar.

6. The device of claim 1, **characterized** in that the third body (10') on each side of the interior cylindrical mantle surface is provided with radial tracks (12') and that the bearing means in the form of rolls are arranged between said tracks (12') and radially extending tracks (8') of the second body (3).

7. The device of any one of the preceding claims, **characterized** in that the third body (10) consists of two cylindrical bodies (10, 10') separated from each other along a diametrical plane, the ends of said body facing away from each other having the tracks (12, 12').

8. The device of any one of the preceding claims, **characterized** in that a roll carrier (18) is arranged to distribute the first rolls (15) evenly and to maintain them in position around the first body (1).

9. The device of claim 7, **characterized** in that the roll carrier (18) is arranged between the cylindrical bodies (10, 10') and embraces an intermediate portion of the first rolls (15).

10. The device of any one of claims 1, 2 or 6, **characterized** in that the second body (3) consists of two annular portions (4, 5) which are axially movable towards and away from each other by means of threads (6).

# FIG.1

# FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 168 942  (ILLINOIS TOOL WORKS INC.)<br>* Claims 1-3,9; page 6, line 31 - page 7, line 20; figures * | 1,6,7 | F 16 H   25/22 |
| A | FR-A-1 494 173  (B.D.A.)<br>* Page  2, column 2, lines 1-15; figure 3 * | 1 | |
| A | DE-A-2 112 785  (HEIDENSTAM)<br>* Page 3, lines 1-8; figure 1 * | 1,8 | |
| A | US-A-4 033 194  (STANLEY)<br>* Column 4, lines 14-51;  figures * | 1,6 | |
| | ----- | | **TECHNICAL FIELDS SEARCHED (Int. Cl.4)**<br><br>F 16 H |

The present search report has been drawn up for all claims

| Place of search | Date of completion of the search | Examiner |
|---|---|---|
| THE HAGUE | 25-02-1987 | MENDE H. |